(19) Europäisches Patentamt
European Patent Office
Office européen des brevets

(11) EP 4 105 258 A1

(12) EUROPEAN PATENT APPLICATION
published in accordance with Art. 153(4) EPC

(43) Date of publication:
**21.12.2022 Bulletin 2022/51**

(21) Application number: **21754600.1**

(22) Date of filing: **02.02.2021**

(51) International Patent Classification (IPC):
***C08G 63/181*** *(2006.01)* ***C08G 63/78*** *(2006.01)*

(52) Cooperative Patent Classification (CPC):
**C08G 63/181; C08G 63/78;** Y02W 90/10

(86) International application number:
**PCT/JP2021/003687**

(87) International publication number:
**WO 2021/161846 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2020 JP 2020021757**

(71) Applicant: **Mitsubishi Chemical Corporation**
**Chiyoda-ku**
**Tokyo 100-8251 (JP)**

(72) Inventors:
- **YATSUGI, Yutaka**
  **Tokyo 100-8251 (JP)**
- **TANAKA, Shunsuke**
  **Tokyo 100-8251 (JP)**

(74) Representative: **Vossius & Partner**
**Patentanwälte Rechtsanwälte mbB**
**Siebertstraße 3**
**81675 München (DE)**

# (54) METHOD FOR PRODUCING ALIPHATIC-AROMATIC POLYESTER

(57) Provided is a method for producing an aliphatic-aromatic polyester, such as PBST, by an esterification and/or transesterification reaction and a polycondensation reaction, the method being capable of reducing the insufficiency in the degree of crystallization in the related art and capable of producing an aliphatic-aromatic polyester having a high degree of crystallinity. A method for producing an aliphatic-aromatic polyester, the method including subjecting an aliphatic diol component, an aliphatic dicarboxylic acid component, and an aromatic dicarboxylic acid component that serve as raw materials to an esterification and/or transesterification reaction and a polycondensation reaction subsequent to the esterification and/or transesterification reaction in a presence of a catalyst, wherein, while the aliphatic-aromatic polyester is produced, a nucleating agent that satisfies a condition represented by Formula (1) below is present in a reaction system. $0°C < Tm^1 - Tm^2 \leq 100°C$ ... (1) $Tm^1$: a melting point (°C) of the nucleating agent, $Tm^2$: a melting point (°C) of the aliphatic-aromatic polyester

EP 4 105 258 A1

## Description

Technical Field

The present invention relates to a method for producing an aliphatic-aromatic polyester in which an aliphatic diol component, an aliphatic dicarboxylic acid component, and an aromatic dicarboxylic acid component are used as principal raw materials.

Background Art

Various materials, such as paper, a plastic, and an aluminum foil, have been used as packaging materials for liquids, powders, granular materials, and solids, such as foods, chemicals, and sundries, agricultural materials, construction materials, and the like. Among these, plastics have been used as molded articles in various applications, such as a bag and a container, since plastics are excellent in terms of, for example, strength, water resistance, formability, transparency, and cost.

Examples of plastics that have been widely used as a bag, a container, and the like include polyethylene, polypropylene, polystyrene, polyvinyl chloride, and polyethylene terephthalate. Since molded articles made from the above plastics are not biodegradable or hydrolyzable or have low decomposition rates under natural conditions, when such molded articles are buried in soil after use, they may remain in soil. Furthermore, when such molded articles are disposed of, they may spoil the landscape. Even when such molded articles are incinerated, they may produce harmful gases or cause damage to incinerators.

Attention has been focused on biodegradable resins as environment-friendly plastics that address the above-described issues. Since a film produced by molding a biodegradable resin can be decomposed in soil when buried in soil after use, global warming and the pollution of air and soil can be prevented. Therefore, films made of biodegradable resins have been commonly used for garbage bags, grocery bags, and the like.

Since films made of biodegradable resins are commonly poor in terms of mechanical properties, a number of studies have been conducted to improve the mechanical properties while maintaining suitable biodegradability.

Aliphatic-aromatic polyesters, such as polybutylene succinate terephthalate (PBST) produced using an aliphatic diol, such as 1,4-butanediol, as a diol component and an aliphatic dicarboxylic acid, such as succinic acid, and an aromatic dicarboxylic acid, such as terephthalic acid, in combination as dicarboxylic acid components, have been proposed as a polyester that has suitable biodegradability, suitable mechanical properties, and suitable formability.

Aliphatic-aromatic polyesters, such as PBST, are produced by conducting an esterification step and a polycondensation step, similarly to other polyesters.

PTL 1 discloses an aliphatic-aromatic polyester that includes at least an aliphatic dicarboxylic acid unit, an aromatic dicarboxylic acid unit, an aliphatic and/or alicyclic diol unit, and a structural unit having a specific amount of trifunctional or higher ester-forming group. In PTL 1, specifically, polybutylene succinate terephthalate (PBST) is produced by conducting an esterification step and a polycondensation step using, as raw materials, succinic acid as an aliphatic dicarboxylic acid, terephthalic acid as an aromatic dicarboxylic acid, 1,4-butanediol as an aliphatic diol, and malic acid as a trifunctional or higher oxycarboxylic acid, and, as catalysts, a titanium compound, such as titanium tetrabutyrate, and an alkaline-earth metal, such as magnesium acetate.

PTL 1: JP2008-31457A

In the method for industrially producing an aliphatic-aromatic polyester, such as PBST, commonly, an aliphatic diol component, an aliphatic dicarboxylic acid component, and an aromatic dicarboxylic acid component, which serve as raw materials, are continuously fed to a reaction system in the presence of a catalyst, an esterification and/or transesterification reaction is subsequently conducted in a polycondensation reaction step, and a high-temperature molten polymer continuously produced from the reaction system is then granulated (formed into pellets) while being cooled.

It was found that, in the case where an aliphatic-aromatic polyester, such as PBST, is produced by the method described in PTL 1, the aliphatic-aromatic polyester is not crystallized to a sufficient degree and blocking of pellets of the aliphatic-aromatic polyester resin may occur. Consequently, in order to maintain a sufficient amount of time for crystallization, the length of a cooling process used for cooling the high-temperature molten polymer is increased excessively. Thus, this may be an economically inefficient process as a process for industrially producing an aliphatic-aromatic polyester, such as PBST. Moreover, in the case where a molded article, such as a film or a bag formed by inflation molding, is produced using the aliphatic-aromatic polyester, such as PBST, produced by the method described in PTL 1, which has a low crystallization rate, it may become impossible to perform cutting due to the fusion of the films. In addition, it may become impossible to open a bag formed by inflation molding to a sufficient degree.

Summary of Invention

In order to address the above issues of the related art, an object of the present invention is to provide a method for producing an aliphatic-aromatic polyester, such as PBST, by an esterification and/or transesterification reaction and a polycondensation reaction, the method being capable of reducing the insufficiency in the degree of crystallization in the related art and capable of producing an aliphatic-aromatic polyester having a high degree of crystallinity.

The inventors of the present invention found that the insufficiency in the degree of crystallization can be reduced and the above issues can be addressed by a specific nucleating agent being present in a reaction system when an aliphatic-aromatic polyester, such as PBST, is produced by an esterification and/or transesterification reaction and a polycondensation reaction and consequently made the present invention.

The summary of the present invention is as described in [1] to [9] below.

[1] A method for producing an aliphatic-aromatic polyester, the method comprising subjecting an aliphatic diol component, an aliphatic dicarboxylic acid component, and an aromatic dicarboxylic acid component that serve as raw materials to an esterification and/or transesterification reaction and a polycondensation reaction subsequent to the esterification and/or transesterification reaction in a presence of a catalyst, wherein, while the aliphatic-aromatic polyester is produced, a nucleating agent that satisfies a condition represented by Formula (1) below is present in a reaction system.

$$0°C < Tm^1 - Tm^2 \leq 100°C \quad ... \quad (1)$$

(in Formula (1) above, $Tm^1$: a melting point (°C) of the nucleating agent, and $Tm^2$: a melting point (°C) of the aliphatic-aromatic polyester)

[2] The method for producing an aliphatic-aromatic polyester according to [1], wherein an amount of the nucleating agent present is 100 to 10000 ppm by weight of an amount of the aliphatic-aromatic polyester produced.

[3] The method for producing an aliphatic-aromatic polyester according to [1] or [2], wherein a molar ratio between the aliphatic dicarboxylic acid component and the aromatic dicarboxylic acid component is 40:60 to 60:40.

[4] The method for producing an aliphatic-aromatic polyester according to any one of [1] to [3], wherein the esterification and/or transesterification reaction is conducted in a presence of a basic inorganic compound.

[5] The method for producing an aliphatic-aromatic polyester according to [4], wherein an amount of the basic inorganic compound present is, in terms of metal atoms, 1 to 100 ppm by weight of the amount of the aliphatic-aromatic polyester produced.

[6] The method for producing an aliphatic-aromatic polyester according to any one of [1] to [5], wherein the aliphatic dicarboxylic acid component is a succinic acid component.

[7] The method for producing an aliphatic-aromatic polyester according to any one of [1] to [6], wherein the aromatic dicarboxylic acid component is a terephthalic acid component and/or a furandicarboxylic acid component.

[8] The method for producing an aliphatic-aromatic polyester according to any one of [1] to [7], wherein the aliphatic dicarboxylic acid component is derived from biomass.

[9] The method for producing an aliphatic-aromatic polyester according to any one of [1] to [8], wherein the aliphatic diol component is derived from biomass. Advantageous Effects of Invention

According to the present invention, it becomes possible to reduce the insufficiency in the degree of crystallization by a specific nucleating agent being present in a reaction system when an aliphatic-aromatic polyester, such as PBST, is produced by an esterification and/or transesterification reaction and a polycondensation reaction. Thus, it becomes possible to produce an aliphatic-aromatic polyester that does not cause blocking of resin pellets, fusion of films, and the like in an industrially advantageous manner. Furthermore, it is considered that a high-quality molded article can be produced using the aliphatic-aromatic polyester.

Description of Embodiments

An embodiment of the present invention is described in detail below. The following description of constituent elements is an example (typical example) of an aspect of the present invention. The present invention is not limited by the contents thereof without departing from the summary of the present invention.

In the present specification, the terms "% by mass", "ppm by mass", and "part by mass" have the same meanings as "% by weight", "ppm by weight", and "part by weight", respectively.

The method for producing an aliphatic-aromatic polyester of the present invention comprises subjecting an aliphatic diol component, an aliphatic dicarboxylic acid component, and an aromatic dicarboxylic acid component that

serve as raw materials to an esterification and/or transesterification reaction and a polycondensation reaction subsequent to the esterification and/or transesterification reaction in a presence of a catalyst, wherein, while the aliphatic-aromatic polyester is produced, a nucleating agent that satisfies a condition represented by Formula (1) below is present in a reaction system.

$$0°C < Tm^1 - Tm^2 \leq 100°C \quad ... \quad (1)$$

(in Formula (1) above, $Tm^1$: a melting point (°C) of the nucleating agent, and $Tm^2$: a melting point (°C) of the aliphatic-aromatic polyester)

The term "aliphatic dicarboxylic acid component" used herein collectively refers to aliphatic dicarboxylic acids, such as an aliphatic dicarboxylic acid and an aliphatic dicarboxylic acid derivative (e.g., aliphatic dicarboxylic acid alkyl ester), which serve as raw materials for polyesters. The term "aromatic dicarboxylic acid component" used herein collectively refers to aromatic dicarboxylic acids, such as an aromatic dicarboxylic acid and an aromatic dicarboxylic acid derivative (e.g., aromatic dicarboxylic acid alkyl ester), which serve as raw materials for polyesters.

In the present invention, the term "aromatic dicarboxylic acid" refers to "aromatic dicarboxylic acids" in a broad sense, which includes "heteroaromatic dicarboxylic acids".

Hereinafter, an aliphatic-aromatic polyester produced by the method for producing an aliphatic-aromatic polyester according to the present invention may be referred to as "aliphatic-aromatic polyester according to the present invention", and the aliphatic-aromatic polyester may be referred to simply as "polyester".

The production method according to the present invention includes an esterification and/or transesterification reaction step of reacting at least an aliphatic diol component, an aliphatic dicarboxylic acid component, and an aromatic dicarboxylic acid component, which serve as principal raw materials, with one another in the presence of a catalyst and a polycondensation reaction step subsequent to the esterification and/or transesterification reaction step. The expression "an aliphatic diol component, an aliphatic dicarboxylic acid component, and an aromatic dicarboxylic acid component, which serve as principal raw materials" means that the diol component used as a raw material is composed primarily of an aliphatic diol component, and the dicarboxylic acid component used as a raw material is composed primarily of an aliphatic dicarboxylic acid component and an aromatic dicarboxylic acid component.

The expression "composed primarily of an aliphatic diol component" means that "the total molar ratio of the aliphatic diol component is the highest among the raw material diol components". In consideration of the physical properties and biodegradability of the polyester produced, the total amount of the aliphatic diol component is preferably 50 mol% or more, is more preferably 60 mol% or more, is further preferably 70 mol% or more, and is particularly preferably 90 to 100 mol% of the total amount of the raw material diol components.

The expression "composed primarily of an aliphatic dicarboxylic acid and an aromatic dicarboxylic acid" means that "the total molar ratio of the aliphatic dicarboxylic acid component and the aromatic dicarboxylic acid component is the highest among the raw material carboxylic acid components". In consideration of the physical properties and biodegradability of the polyester produced, the total amount of the aliphatic dicarboxylic acid component and the aromatic dicarboxylic acid component is preferably 50 mol% or more, is more preferably 60 mol% or more, is further preferably 70 mol% or more, and is particularly preferably 90 to 100 mol% of the total amount of the raw material carboxylic acid components.

In the present invention, the above reaction steps for producing the polyester can be conducted by either a batch or continuous method. In consideration of quality stability and energy efficiency, a method in which the raw materials are continuously fed and the polyester is continuously produced, that is, a "continuous method", is preferable.

<Nucleating Agent>

The nucleating agent used in the method for producing an aliphatic-aromatic polyester according to the present invention is characterized in that the difference ($Tm^1$ - $Tm^2$) between the melting point ($Tm^2$ (°C)) of the aliphatic-aromatic polyester produced and the melting point ($Tm^1$ (°C)) of the nucleating agent falls within the range of 0°C to 100°C. The use of a nucleating agent that satisfies the above melting point condition shortens the crystallization exothermic peak time (the temperature-drop crystal peak time described below) when the molten aliphatic-aromatic polyester produced by the polycondensation reaction is cooled and consequently accelerates the crystallization of the aliphatic-aromatic polyester during cooling. This shortens the time required for the cooling step and therefore enables pellets of the aliphatic-aromatic polyester to be continuously produced with efficiency in terms of cost-effectiveness.

The method for measuring the melting point $Tm^1$ of the nucleating agent is not limited. The melting point $Tm^1$ is measured by, for example, a visual observation method (JIS K6220) or a thermal analysis method in which DCS or DTA is used. In the case where the nucleating agent is a commercial product, the catalog value thereof can be used.

The method for measuring the melting point ($Tm^2$) of the aliphatic-aromatic polyester is also not limited. The

melting point ($Tm^2$) is measured by, for example, the method described in Examples below. A suitable melting point of the aliphatic-aromatic polyester according to the present invention is described below.

In the present invention, the difference ($Tm^1$ - $Tm^2$) between the melting point ($Tm^2$ (°C)) of the aliphatic-aromatic polyester and the melting point ($Tm^1$ (°C)) of the nucleating agent is 100°C or less, is preferably 50°C or less, is more preferably 40°C or less, is further preferably 20°C or less, and is most preferably 15°C or less. The smaller the $Tm^1$ - $Tm^2$ value, the shorter the crystallization exothermic peak time. Since the nucleating agent needs to solidify earlier than the aliphatic-aromatic polyester so as to serve as crystal nuclei, $Tm^1$ - $Tm^2$ is 0°C or more, is preferably 1°C or more, and is more preferably 3°C or more.

The type of the nucleating agent is not limited. Any nucleating agent that satisfies the above condition may be used. Examples of the nucleating agent that can be used include hydrocarbon nucleating agents, such as a polyethylene wax and a polypropylene wax, aliphatic amide nucleating agents, and phosphoric acid ester metal salt nucleating agents. In consideration of the color tone of the aliphatic-aromatic polyester produced and impacts on polymerizability, the nucleating agent is preferably a hydrocarbon nucleating agent, is more preferably a polyethylene wax or a polypropylene wax, and is further preferably a polyethylene wax.

Polyethylene and polypropylene waxes having various melting points, which vary by molecular weight, the presence or absence of branches, the proportions of copolymerization components, and the like, are commercially available. It is possible to select and use a nucleating agent that satisfies the above melting point condition from the commercial products.

Only one nucleating agent that satisfies the melting point condition may be used alone. Alternatively, two or more nucleating agents that satisfy the melting point condition may be used in a mixture.

In the method for producing an aliphatic-aromatic polyester according to the present invention, the method by which the nucleating agent is present in the reaction system is not limited. The nucleating agent may be present in the esterification and/or transesterification reaction system or the polycondensation reaction system. For example, a method of feeding the nucleating agent into a reaction tank for the esterification and/or transesterification reaction together with the raw materials, that is, the aliphatic diol component, the aliphatic dicarboxylic acid component, the aromatic dicarboxylic acid component, etc. described below; a method of adding the nucleating agent directly to the reaction tank for the esterification and/or transesterification reaction separately from the above raw materials; a method of adding the nucleating agent to a polycondensation reaction tank; and a method of adding the nucleating agent to an extruder attached as an accessory to the polycondensation reaction tank, which transports the high-temperature molten polyester to the subsequent step, may be used. Two or more of the above methods may be used in combination.

In the method for producing an aliphatic-aromatic polyester according to the present invention, the amount of the nucleating agent present in the reaction system is preferably 100 to 10000 ppm by weight of the amount of the aliphatic-aromatic polyester produced. The amount of the nucleating agent is more preferably 200 to 5000 ppm by weight and is further preferably 500 to 3000 ppm by weight. When the amount of the nucleating agent is equal to or less than the above upper limit, the amount of the nucleating agent discharged from the reaction system as a distillate can be limited and, consequently, the likelihood of the nucleating agent being not collected in the subsequent distillation system and increasing the load placed on the entire process can be reduced. When the amount of the nucleating agent is equal to or more than the above lower limit, it becomes possible to cause the crystallization of the aliphatic-aromatic polyester to a sufficient degree.

<Diol Component>

As a diol component used in the present invention, at least an aliphatic diol component is used as described above. When the total molar ratio of the aliphatic diol component is the highest among the raw material diol components, aliphatic diol components commonly used as raw materials for polyesters may be used without limitation.

Examples of the aliphatic diol component include alkylene diols, such as ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, and neopentyl glycol; oxyalkylene diols, such as diethylene glycol, polyethylene glycol, polypropylene glycol, and polytetramethylene ether glycol; and cycloalkylene diols, such as 1,2-cyclohexanediol, 1,4-cyclohexanediol, 1,2-cyclohexanedimethanol, and 1,4-cyclohexanedimethanol. Among these, in consideration of the physical properties of the polyester produced, alkylene diols having 6 or less carbon atoms, such as ethylene glycol, 1,3-propanediol, and 1,4-butanediol, and cycloalkylene diols having 6 or less carbon atoms, such as 1,4-cyclohexanedimethanol, are preferable. In particular, 1,4-butanediol is preferable. The above aliphatic diol components may be used in combination of two or more.

In the case where 1,4-butanediol is used as an aliphatic diol component, the amount of the 1,4-butanediol used is preferably 50 mol% or more, is more preferably 70 mol% or more, and is particularly preferably 90 to 100 mol% of the amount of all the aliphatic diol components in consideration of the melting point (heat resistance), biodegradability, and mechanical properties of the polyester produced.

Among the above aliphatic diol components, ethylene glycol, 1,3-propanediol, and 1,4-butanediol are preferably

those derived from biomass (plant raw materials).

<Dicarboxylic Acid Component>

As a carboxylic acid component used in the present invention, at least an aliphatic dicarboxylic acid component and an aromatic dicarboxylic acid component are used as described above. When the total molar ratio of the aliphatic dicarboxylic acid component and the aromatic dicarboxylic acid component is the highest among the raw material dicarboxylic acid components, aliphatic dicarboxylic acid components and aromatic dicarboxylic acid components commonly used as raw materials for polyesters may be used without limitation.

Examples of the aliphatic dicarboxylic acid component used as a dicarboxylic acid component include aliphatic dicarboxylic acids, such as oxalic acid, malonic acid, succinic acid, succinic anhydride, glutaric acid, adipic acid, pimelic acid, suberic acid, azelaic acid, sebacic acid, undecadicarboxylic acid, dodecadicarboxylic acid, and dimer acid; and hydrides of aromatic dicarboxylic acids, such as hexahydrophthalic acid, hexahydroisophthalic acid, and hexahydroterephthalic acid. Among these, in consideration of the physical properties of the polyester produced, aliphatic dicarboxylic acids, such as succinic acid, succinic anhydride, adipic acid, and sebacic acid, and derivatives thereof, such as an alkyl ester, are preferable. Succinic acid is particularly preferable because, in such a case, the advantageous effect of the present invention, that is, improvement of crystallization, is markedly achieved. The above aliphatic dicarboxylic acid components may be used in combination of two or more.

Among the above aliphatic dicarboxylic acid components, for example, succinic acid, succinic anhydride, and adipic acid are preferably those derived from biomass (plant raw materials).

In the case where succinic acid is used as an aliphatic dicarboxylic acid component, the amount of the succinic acid used is preferably 50 mol% or more, is more preferably 70 mol% or more, and is particularly preferably 90 to 100 mol% of the amount of all the aliphatic dicarboxylic acid components in consideration of the melting point (heat resistance), biodegradability, and mechanical properties of the polyester produced.

Examples of the aromatic dicarboxylic acid component include terephthalic acid, isophthalic acid, naphthalenedicarboxylic acid, diphenyldicarboxylic acid, furandicarboxylic acid, and derivatives thereof, such as an alkyl ester. In consideration of the physical properties of the polyester produced, terephthalic acid, isophthalic acid, and furandicarboxylic acid are preferable, and terephthalic acid and furandicarboxylic acid are particularly preferable. The above aromatic dicarboxylic acid components may be used alone or in a mixture of two or more.

In the case where terephthalic acid is used as an aromatic dicarboxylic acid component, the amount of the terephthalic acid used is preferably 50 mol% or more, is more preferably 70 mol% or more, and is particularly preferably 90 to 100 mol% of the amount of all the aromatic dicarboxylic acid components in consideration of the melting point (heat resistance) and mechanical properties of the polyester produced.

The molar ratio between the aliphatic dicarboxylic acid component and the aromatic dicarboxylic acid component used in the present invention is preferably Aliphatic dicarboxylic acid component:Aromatic dicarboxylic acid component = 40:60 to 60:40. The above molar ratio is particularly preferably Aliphatic dicarboxylic acid component:Aromatic dicarboxylic acid component = 50:50 to 60:40 in consideration of the heat resistance, biodegradability, mechanical properties, and formability of the polyester produced.

The aliphatic-aromatic polyester produced by the method for producing an aliphatic-aromatic polyester according to the present invention is not limited and may be any aliphatic-aromatic polyester produced using the above-described aliphatic diol component, the above-described aliphatic dicarboxylic acid component, and the above-described aromatic dicarboxylic acid component in combination. The aliphatic-aromatic polyester is preferably polybutylene succinate terephthalate (PBST) or polybutylene succinate furanoate (PBSF).

<Other Copolymerization Component>

The aliphatic-aromatic polyester according to the present invention may include a structural component other than the aliphatic diol component, the aliphatic dicarboxylic acid component, or the aromatic dicarboxylic acid component as a copolymerization component. Examples of the copolymerization component that can be used in this case include oxycarboxylic acids, such as lactic acid, glycol acid, hydroxybutyric acid, hydroxycaproic acid, 2-hydroxy-3,3-dimethylbutyric acid, 2-hydroxy-3-methylbutyric acid, 2-hydroxyisocaproic acid, malic acid, maleic acid, citric acid, and fumaric acid; esters and lactones of the above oxycarboxylic acids; oxycarboxylic acid polymers; polyhydric alcohols having three or more functional groups, such as glycerin, trimethylolpropane, and pentaerythritol; and polyvalent carboxylic acids having three or more functional groups, such as propanetricarboxylic acid, pyromellitic acid, trimellitic acid benzophenonetetracarboxylic acid, and anhydrides thereof; and anhydrides thereof.

Among these, for example, the oxycarboxylic acids having three or more functional groups, the alcohols having three or more functional groups, and the carboxylic acids having three or more functional groups enable a polyester having a high viscosity to be readily produced even when used in a small amount. In particular, an oxycarboxylic acid,

such as malic acid, citric acid, or fumaric acid, or a polyhydric alcohol, such as glycerin, trimethylolpropane, or pentaerythritol, is preferably used, and trimethylolpropane is particularly preferably used.

In the case where a polyfunctional compound having three or more functional groups is used, the amount of the polyfunctional compound used is preferably 0.001 to 5 mol% and is more preferably 0.05 to 0.5 mol% of the amount of all the dicarboxylic acid components. When the amount of the polyfunctional compound having three or more functional groups is equal to or less than the above upper limit, the formation of gels (unmelted substances) in the polyester produced is readily reduced. When the amount of the polyfunctional compound having three or more functional groups is equal to or more than the above lower limit, the advantages of using the polyfunctional compound (commonly, it becomes possible to increase the viscosity of the polyester produced) are readily achieved.

<Basic Inorganic Compound>

In the method for producing an aliphatic-aromatic polyester according to the present invention, it is preferable to make a basic inorganic compound be present in the esterification and/or transesterification reaction step. Making a basic inorganic compound be present in the esterification and/or transesterification reaction step reduces the content of tetrahydrofuran in the aliphatic-aromatic polyester produced. Furthermore, the terminal acid value can be reduced.

Examples of the basic inorganic compound include alkali metal hydroxides, such as sodium hydroxide, potassium hydroxide, and lithium hydroxide. Sodium hydroxide is preferable. The above basic inorganic compounds may be used alone or in a mixture of two or more.

The amount of the basic inorganic compound used is, in terms of the amount of metal atoms, preferably 1 to 100 ppm by weight and is more preferably 1 to 50 ppm by weight of the amount of the aliphatic-aromatic polyester produced. When the amount of the basic inorganic compound is equal to or more than the above lower limit, the above advantageous effects of the basic inorganic compound can be achieved sufficiently. When the amount of the basic inorganic compound is equal to or less than the above upper limit, a reduction in polymerization activity and the formation of foreign matter as a result of a reaction with the dicarboxylic acid component can be limited.

The basic inorganic compound may be present in the esterification and/or transesterification reaction step; the basic inorganic compound may be added in the esterification and/or transesterification reaction step or in a step prior to the esterification and/or transesterification reaction step. For example, the basic inorganic compound may be fed to the esterification and/or transesterification reaction tank together with the aliphatic diol component, the aliphatic dicarboxylic acid component, the aromatic dicarboxylic acid component, etc., which serve as raw materials, or may be fed directly to the reaction tank separately from the above raw materials.

<Method for Producing Aliphatic-Aromatic Polyester>

The method for producing an aliphatic-aromatic polyester according to the present invention is described below taking a continuous production method as an example.

In the method described as an example below, an aliphatic-aromatic polyester is produced by conducting an esterification reaction step using an aliphatic diol, an aliphatic dicarboxylic acid, and an aromatic dicarboxylic acid and subsequently conducting a polycondensation reaction step. The esterification reaction step may be a transesterification reaction step or a step in which both esterification reaction and transesterification reaction are conducted.

In the continuous production method, for example, an aliphatic dicarboxylic acid, an aromatic dicarboxylic acid, and an aliphatic diol are subjected to an esterification reaction step and a melt polycondensation reaction step with a plurality of reaction tanks arranged sequentially to continuously form polyester pellets. The production method is not limited to the continuous method; methods for producing an aliphatic-aromatic polyester which are known in the related art may be used without impairing the advantageous effects of the present invention.

The esterification reaction step, in which at least a dicarboxylic acid component and a diol component are caused to react with each other, and the subsequent polycondensation reaction step can be conducted using either a plurality of reaction tanks arranged sequentially or a single reaction tank. It is preferable to conduct the above reaction steps using a plurality of reaction tanks arranged sequentially in order to reduce variations in the physical properties of the polyester produced.

The feed of the nucleating agent and the feed of the basic inorganic compound are not described hereinafter. In the present invention, as described above, the specific nucleating agent is fed in the esterification and/or transesterification reaction step and the polycondensation reaction step, and the basic inorganic compound is preferably fed in the esterification and/or transesterification reaction step.

<Esterification Reaction Step>

The reaction temperature in the esterification reaction step is not limited and may be any temperature at which

the esterification reaction can be conducted. The reaction temperature is preferably 200°C or more and is more preferably 210°C or more in order to increase reaction velocity. The reaction temperature is preferably 270°C or less, is more preferably 260°C or less, and is particularly preferably 250°C or less in order to prevent, for example, staining of the polyester. If the reaction temperature is excessively low, the esterification reaction velocity is low and a large amount of reaction time is required. This increases the occurrence of unfavorable reactions, such as dehydration decomposition of aliphatic diols. If the reaction temperature is excessively high, the amounts of aliphatic diol, aliphatic dicarboxylic acid, and aromatic dicarboxylic acid decomposed are increased. Furthermore, the amount of substances scattered inside the reaction tank is increased. They are likely to cause the formation of foreign matter and increase the occurrence of haze in the reaction product.

The esterification reaction temperature is preferably a constant temperature. When the esterification reaction temperature is a constant temperature, the esterification rate becomes stabilized. The constant temperature is preset temperature ± 5°C and is preferably preset temperature ± 2°C.

The reaction atmosphere is preferably an inert gas atmosphere, such as nitrogen or argon.

The reaction pressure is preferably 50 to 200 kPa, is more preferably 60 kPa or more, and is further preferably 70 kPa or more; and is more preferably 130 kPa or less and is further preferably 110 kPa or less. If the reaction pressure is less than the above lower limit, the amount of substances scattered inside the reaction tank is increased, the haze of the reaction product is increased, and the amount of foreign matter is likely to be increased. Furthermore, the amount of the aliphatic diol discharged outside the reaction system as a distillate is increased and, consequently, polycondensation reaction velocity is likely to be reduced. If the reaction pressure exceeds the above upper limit, the occurrence of dehydration decomposition of the aliphatic diol is increased and, consequently, polycondensation reaction velocity is likely to be reduced.

The reaction time is preferably 1 hour or more. The upper limit thereof is preferably 10 hours or less and is more preferably 4 hours or less.

The molar reaction ratio of the amount of the aliphatic diol to the total amount of the aliphatic dicarboxylic acid and the aromatic dicarboxylic acid used in the esterification reaction is the molar ratio of the amount of the aliphatic diol and the esterified aliphatic diol to the amount of the aliphatic dicarboxylic acid, the aromatic dicarboxylic acid, the esterified aliphatic dicarboxylic acid, and the esterified aromatic dicarboxylic acid that are present in the gas phase and reaction solution phase of the esterification reaction tank. The aliphatic dicarboxylic acid, aromatic dicarboxylic acid, and aliphatic diol that become decomposed in the reaction system and do not contribute to the esterification reaction and the decomposition products thereof are not taken into account. Examples of the substances that become decomposed and do not contribute to the esterification reaction include tetrahydrofuran produced as a result of decomposition of 1,4-butanediol, which is an aliphatic diol. Tetrahydrofuran is not taken into account in the calculation of the above molar ratio. In the present invention, the lower limit for the above molar reaction ratio is commonly 1.10 or more, is preferably 1.12 or more, is further preferably 1.15 or more, and is particularly preferably 1.20 or more. The upper limit for the above molar reaction ratio is commonly 3.00 or less, is preferably 2.50 or less, is further preferably 2.30 or less, and is particularly preferably 2.00 or less. If the above molar reaction ratio is less than the above lower limit, the esterification reaction is unlikely to occur to a sufficient degree, the subsequent reaction, that is, the polycondensation reaction, is unlikely to occur smoothly, and it becomes difficult to produce a polyester having a high degree of polymerization. If the above molar reaction ratio exceeds the above upper limit, the amount of aliphatic diol, aliphatic dicarboxylic acid, and aromatic dicarboxylic acid decomposed are likely to be increased. It is preferable to supply the aliphatic diol to the esterification reaction system as appropriate in order to maintain the above molar reaction ratio to fall within the above preferable range.

<Polycondensation Reaction Step>

In the method for producing an aliphatic-aromatic polyester according to the present invention, a polycondensation reaction is conducted in the polycondensation reaction step subsequent to the esterification reaction step.

The polycondensation reaction can be conducted using a plurality of reaction tanks arranged sequentially under reduced pressure.

The reaction pressure inside the final polycondensation reaction tank used in the polycondensation reaction step is, as for the lower limit, commonly 0.01 kPa or more and is preferably 0.03 kPa or more; and, as for the upper limit, is commonly 1.4 kPa or less and is preferably 0.4 kPa or less. If the pressure at which the polycondensation reaction is conducted is excessively high, the amount of time required by polycondensation is increased and, accordingly, a reduction in molecular weight and staining are caused as a result of pyrolysis of the polyester. Thus, it may become difficult to produce a polyester having properties sufficient for practical applications. A production method in which an ultrahigh vacuum polycondensation facility capable of achieving a reaction pressure of less than 0.01 kPa is used is preferable in terms of increase in polycondensation reaction velocity, but disadvantageous in terms of cost-effectiveness because this production method requires considerably large capital investment.

The lower limit for the reaction temperature is commonly 215°C and is preferably 220°C. The upper limit for

the reaction temperature is commonly 270°C and is preferably 260°C. If the above reaction temperature is less than the above lower limit, the polycondensation reaction velocity is low and a large amount of time is required for producing a polyester having a high degree of polymerization. Moreover, a high-power stirrer is required. Thus, setting the above reaction temperature to be less than the above lower limit is disadvantageous in terms of cost-effectiveness. If the above reaction temperature is more than the above upper limit, pyrolysis of the polyester is likely to occur during production. This may make it difficult to produce a polyester having a high degree of polymerization.

The lower limit for the reaction time is commonly 1 hour. The upper limit for the reaction time is commonly 15 hours, is preferably 10 hours, and is more preferably 8 hours. If the reaction time is excessively short, the reaction does not occur to a sufficient degree and it becomes difficult to produce a polyester having a high degree of polymerization. In addition, the mechanical properties of a molded article formed of the polyester are likely to be poor. If the reaction time is excessively long, molecular weight is significantly reduced as a result of pyrolysis of the polyester. This may degrade the mechanical properties of a molded article formed of the polyester. In addition, the amount of carboxyl group terminals, which adversely affect the durability of the polyester, may be increased as a result of pyrolysis.

It is possible to produce a polyester having an intended intrinsic viscosity by controlling the polycondensation reaction temperature, the reaction time, and the reaction pressure.

<Reaction Catalyst>

The esterification reaction and the polycondensation reaction can be accelerated by using a reaction catalyst. In the case where the catalyst is used, if the catalyst is added to the gas phase portion of a reaction tank, the haze of the polyester produced may be increased. Furthermore, the catalyst may be converted into foreign matter. Therefore, it is preferable to add the catalyst to the reaction solution.

It is preferable to use a catalyst in the polycondensation reaction because the reaction is unlikely to occur without a catalyst. The polycondensation reaction catalyst may be added in any of the stages from the esterification reaction step to the polycondensation reaction step. The polycondensation reaction catalyst may be added in a plurality of batches from the esterification reaction step to the polycondensation reaction step.

As a polycondensation reaction catalyst, a compound that includes at least one selected from the metal elements belonging to Groups 1 to 14 of the periodic table is commonly used. Specific examples of the metal elements include scandium, yttrium, samarium, titanium, zirconium, vanadium, chromium, molybdenum, tungsten, tin, antimony, cerium, germanium, zinc, cobalt, manganese, iron, aluminum, magnesium, calcium, strontium, sodium, and potassium. Among these, scandium, yttrium, titanium, zirconium, vanadium, molybdenum, tungsten, zinc, iron, and germanium are preferable, and titanium, zirconium, tungsten, iron, and germanium are particularly preferable. In order to reduce the concentration of polyester terminals which affect the thermal stability of the polyester, among the above metals, the metal elements belonging to Groups 3 to 6 of the periodic table which have Lewis acidity are further preferable. Specific examples of such metal elements include scandium, titanium, zirconium, vanadium, molybdenum, and tungsten. In consideration of ease of availability, titanium and zirconium are particularly preferable. In consideration of reaction activity, titanium is further preferable.

Note that the term "periodic table" used herein refers to the long form of the periodic table (Nomenclature of Inorganic Chemistry IUPAC Recommendations 2005).

In the present invention, a titanium compound is preferably used as a catalyst for the esterification reaction step.

The titanium compound is preferably tetraalkyl titanate or a hydrolysate thereof. Specific examples of the titanium compound include tetra-n-propyl titanate, tetraisopropyl titanate, tetra-n-butyl titanate, tetra-t-butyl titanate, tetraphenyl titanate, tetracyclohexyl titanate, tetrabenzyl titanate, mixed titanates thereof, and hydrolysates thereof.

Titanium (oxy)acetylacetonate, titanium tetraacetylacetonate, titanium (diisoproxide)acetylacetonate, titanium bis(ammoniumlactato)dihydroxide, titanium bis(ethylacetoacetato)diisopropoxide, titanium (triethanolaminato)isopropoxide, polyhydroxytitanium stearate, titanium lactate, titanium triethanolaminate, butyltitanate dimer, and the like can also be used.

Among these, tetra-n-propyl titanate, tetraisopropyl titanate, tetra-n-butyl titanate, titanium (oxy)acetylacetonate, titanium tetraacetylacetonate, titanium bis(ammoniumlactato)dihydroxide, polyhydroxytitanium stearate, titanium lactate, and butyltitanate dimer are preferable, tetra-n-butyl titanate, titanium (oxy)acetylacetonate, titanium tetraacetylacetonate, polyhydroxytitanium stearate, titanium lactate, and butyltitanate dimer are more preferable, and tetra-n-butyl titanate, polyhydroxytitanium stearate, titanium (oxy)acetylacetonate, and titanium tetraacetylacetonate are particularly preferable.

The above titanium compounds are fed in the esterification reaction step in the form of a catalyst solution, which is prepared using a solvent for catalyst dissolution, such as an alcohol (e.g., methanol, ethanol, isopropanol, or butanol), a diol (e.g., ethylene glycol, butanediol, or pentanediol), an ether (e.g., diethyl ether or tetrahydrofuran), a nitrile (e.g., acetonitrile), a hydrocarbon compound (e.g., heptane or toluene), water, or a mixture thereof, such that the concentration of the titanium compound is commonly 0.05% to 5% by weight.

<Phosphorus Compound>

In the case where, in particular, adipic acid is used as an aliphatic dicarboxylic acid component in the production of the aliphatic-aromatic polyester, the aliphatic-aromatic polyester produced becomes stained in red to pink. A molded article formed of the stained aliphatic-aromatic polyester becomes reddish and may be poor in terms of quality. Moreover, since 1,4-butanediol, which is used as a raw material diol component, has high degradability, tetrahydrofuran is likely to be produced as a by-product. This may result in inefficiency (e.g., reduction in 1,4-butanediol intensity).

The gas discharged from the esterification and/or transesterification reaction tank and the polycondensation reaction tank as a distillate includes, as principal constituents, an aliphatic diol component that is a by-product and water. For example, in the case where 1,4-butanediol is used as an aliphatic diol component, a decomposition product of 1,4-butanediol, that is, tetrahydrofuran, is also included in the gas. The above gas components are commonly separated and collected with a rectifying column, a wet condenser, or the like. While a high-boiling component including the raw material diol component as a principal constituent is partially reused as a raw material, it is not preferable that the amount of tetrahydrofuran produced as a by-product be large because tetrahydrofuran does not contribute to the esterification reaction and the 1,4-butanediol intensity may be reduced accordingly.

For addressing the above issues, limiting the production of tetrahydrofuran as a by-product, and producing a high-quality aliphatic-aromatic polyester having good color tone, it is effective to adjust the terminal acid value of an ester oligomer produced by reacting the aliphatic diol component with the aliphatic dicarboxylic acid component and the aromatic dicarboxylic acid component in the esterification and/or transesterification reaction step to be 30 to 1000 eq./ton and to conduct the polycondensation reaction after a phosphorus compound has been brought into contact with the ester oligomer having the adjusted terminal acid value.

In this case, examples of the phosphorus compound brought into contact with the ester oligomer having a terminal acid value of 30 to 1000 eq./ton, which is produced in the esterification and/or transesterification reaction step, include orthophosphoric acid, polyphosphoric acid, pentavalent phosphorus compounds, such as trimethyl phosphate, triethyl phosphate, tri-n-butyl phosphate, trioctyl phosphate, triphenyl phosphate, tricresyl phosphate, tris(triethylene glycol) phosphate, ethyl diethylphosphonoacetate, methyl acid phosphate, ethyl acid phosphate, isopropyl acid phosphate, butyl acid phosphate, monobutyl phosphate, dibutyl phosphate, dioctyl phosphate, and triethylene glycol acid phosphate, and trivalent phosphorus compounds, such as phosphorus acid, hypophosphorous acid, diethyl phosphite, trisdodecyl phosphite, trisnonyldecyl phosphite, and triphenyl phosphite. Among these, acidic phosphoric acid ester compounds are preferable. As an acidic phosphoric acid ester compound, a compound having a phosphoric acid ester structure including at least one hydroxyl group which is represented by General Formulae (I) and/or (II) below is preferably used.

[Chem. 1]

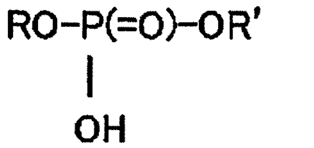

(I)

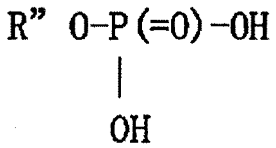

(II)

In the above formulae, R, R', and R" each represent an alkyl group having 1 to 6 carbon atoms, a cyclohexyl group, an aryl group, or a 2-hydroxyethyl group. In Formula (I), R and R' may be mutually the same or different.

Specific examples of such acidic phosphoric acid ester compounds include methyl acid phosphate, ethyl acid phosphate, isopropyl acid phosphate, butyl acid phosphate, and octyl acid phosphate. Ethyl acid phosphate and butyl acid phosphate are preferable. The above acidic phosphoric acid ester compounds may be used alone or in combination of two or more.

Acidic phosphoric acid ester compounds are classified into monoester bodies represented by General Formula (II) above and diester bodies represented by General Formula (I) above. In order to produce a catalyst having high catalytic activity, it is preferable to use a monoester body or a mixture of a monoester body and a diester body. The mixing weight ratio between the monoester body and the diester body (monoester body:diester body) is preferably 80

or less:20 or more, is further preferably 70 or less:30 or more, and is particularly preferably 60 or less:40 or more; and is preferably 20 or more:80 or less, is further preferably 30 or more:70 or less, and is particularly preferably 40 or more:60 or less.

In the method in which the phosphorus compound is used in the above-described manner, it is preferable to bring an alkaline-earth metal compound into contact with the ester oligomer together with the phosphorus compound. In this case, examples of the alkaline-earth metal compound include compounds of beryllium, magnesium, calcium, strontium, and barium. In consideration of ease of handing and availability and catalytic effects, compounds of magnesium and calcium are preferable. A magnesium compound is particularly preferable because it has excellent catalytic effects. Specific examples of the magnesium compound include magnesium acetate, magnesium hydroxide, magnesium carbonate, magnesium oxide, magnesium alkoxide, and magnesium hydrogen phosphate. Among these, magnesium acetate is preferable.

The above phosphorus compound and alkaline-earth metal compound are preferably added to the ester oligomer fed to the polycondensation reaction step in the form of a catalyst solution, which is prepared using the solvent described above as an example of the solvent for catalyst dissolution which is used in the preparation of the catalyst solution of the titanium compound such that the concentration of the phosphorus compound is 0.01% to 7.6% by weight and the concentration of the alkaline-earth metal compound is 0.02% to 9.7% by weight.

The amount of the titanium compound used in the esterification reaction step, the amounts of the phosphorus compound and alkaline-earth metal compound used in the polycondensation reaction step, and the proportions at which the above compounds are used are not limited. For example, it is preferable to use the titanium compound such that the amount of the titanium compound in terms of Ti is 5 to 100 ppm by weight of the amount of the polyester produced. It is preferable to use the phosphorus compound such that the ratio (P/Ti molar ratio) of the number of moles of the phosphorus compound in terms of P relative to the number of moles of the titanium compound in terms of Ti is 0.5 to 2.5. It is preferable to use the alkaline-earth metal compound such that the ratio (alkaline-earth metal/Ti molar ratio) of the number of moles of the alkaline-earth metal compound in terms of alkaline-earth metals relative to the number of moles of the titanium compound in terms of Ti is 0.5 to 3.0. Setting the amount of any of the catalyst compounds to be excessively large is disadvantageous in terms of cost-effectiveness. Furthermore, although the reasons are still unknown, the terminal acid value of the polyester produced may be increased finally and, therefore, the thermal stability and hydrolysis resistance of the polyester may become degraded as a result of increases in terminal acid value and the concentration of residual catalyst. On the other hand, if the amount of any of the catalyst compounds is excessively small, reaction activity is reduced and, consequently, the pyrolysis of the polyester in the production of the polyester is induced. This makes it difficult to produce a polyester having physical properties useful in practical applications.

<Reaction Tank>

In the present invention, known reaction tanks may be used as an esterification reaction tank. Any of a vertical stirred complete mixing tank, a vertical thermal convection mixing tank, a column continuous reaction tank, and the like may be used. The reaction tank may be a single tank. Alternatively, a plurality of tanks of the same type or different types which are arranged in series may be used as reaction tanks. In particular, a reaction tank having a stirring device is preferable. In addition to common stirring devices that include a power unit, a shaft, and a stirring blade, high-speed rotary stirrers, such as a turbine stator high-speed rotary stirrer, a disk mill stirrer, and a rotary mill stirrer, can also be used.

The mode in which stirring is performed is also not limited; in addition to a common stirring method in which a reaction solution included in a reaction tank is directly stirred from, for example, an upper, lower, or side part of the reaction tank, a method in which part of the reaction solution is diverted outside a reaction tank through a pipe or the like and then stirred with an in-line mixer or the like such that the reaction solution is circulated may also be used. Known types of stirring blades may be used. Specific examples thereof include a propeller blade, a screw blade, a turbine blade, fan turbine blade, a disk turbine blade, a Pfaudler blade, a FULLZONE blade, and a MAXBLEND blade.

The type of the polycondensation reaction tank used in the present invention is not limited. Examples thereof include a vertical stirred polymerization tank, a horizontal stirred polymerization tank, and a thin-film evaporation polymerization tank. The polycondensation reaction tank may be a single tank. Alternatively, a plurality of tanks of the same type or different types which are arranged in series may be used as polycondensation reaction tanks. In the late stage of polycondensation in which the viscosity of the reaction solution increases, it is preferable to use a horizontal stirred polymerization machine having a thin-film evaporation function which is excellent in terms of interface renewability, plug flow property, and self-cleaning property.

<Pelletization>

The high-temperature molten polyester produced in the above polycondensation reaction is pelletized while being cooled to form polyester pellets.

Examples of common pelletization methods include a strand cutting method in which the high-temperature molten polyester is extruded through a nozzle hole formed in a die head with a gear pump or an extruder and, while being cooled with water or the like or after having been cooled to solidify, the resulting strand is cut with a cutter; and an underwater hot-cutting method in which the polyester is extruded into water through a nozzle hole and then immediately cut while the polyester is in a molten state.

In the aliphatic-aromatic polyester according to the present invention, an underwater hot-cutting method is preferable in order to reduce the likelihood of swarf entering the resulting pellets and the angle of repose of the pellets and enhance the consistency with which the pellets are transported and the consistency with which the pellets are fed to a molding machine during molding. The temperature of the cooling water used in the underwater cutting method is, as for the lower limit, preferably 10°C or more and is more preferably 20°C or more; and, as for the upper limit, is preferably 70°C or less, is more preferably 60°C or less, and is further preferably 50°C or less.

Examples of the shape of the pellets include a spherical shape, an oval shape, a cylindrical shape, a cylindroid shape, a long cylindrical shape, a prismatic shape, a cocoon-like shape, and shapes formed by flattening the above shapes. When the underwater hot-cutting method is used, the resulting pellets are likely to have an oval shape, a cylindrical shape, a cylindroid shape, a spherical shape, a cocoon-like shape, or a shape formed by flattening any of the above shapes. Among these, an oval shape and a cylindrical shape are preferable.

<Process for Producing Polyester>

In the production of the aliphatic-aromatic polyester according to the present invention, the raw materials are commonly mixed with an aliphatic diol component, such as 1,4-butanediol, in a raw material mixing tank. The resulting mixture is fed to the esterification reaction tank through a raw material feed line in the form of a slurry or liquid. In the case where a catalyst is used in the esterification reaction, the catalyst is formed into a solution of an aliphatic diol component, such as 1,4-butanediol, in a catalyst preparation tank, and the resulting catalyst solution is fed through a catalyst feed line.

The gas discharged from the esterification reaction tank as a distillate is passed to a rectifying column through a distillation line and separated into a high- and low-boiling components in the rectifying column. Commonly, the principal constituent of the high-boiling component is an aliphatic diol component, such as 1,4-butanediol, and the principal constituent of the low-boiling component is water and the product of decomposition of an aliphatic diol component, such as 1,4-butanediol.

The high-boiling component separated in the rectifying column is drawn through a draw line and, through a pump, part of the high-boiling component is circulated to the esterification reaction tank through a recirculation line. Other part of the high-boiling component is returned to the rectifying column through a circulation line. The excess is drawn outside through a draw line. The low-boiling component separated in the rectifying column is drawn thorough a gas draw line, condensed in a condenser, then passed through a condensate liquid line, and temporarily stored in a tank. Part of the light-boiling component accumulated in the tank is returned to the rectifying column through a draw line, a pump, and a circulation line, and the other part is drawn outside the system through a draw line. The condenser is connected to an exhaust device with a vent line. The product of the esterification reaction which is produced in the esterification reaction tank is fed to a polycondensation reaction tank (first polycondensation reaction tank) through a draw pump and a draw line for the esterification reaction product.

<Physical Properties of Polyester>

As a result of the specific nucleating agent being present in the production step, the aliphatic-aromatic polyester according to the present invention, which is produced by the method for producing an aliphatic-aromatic polyester according to the present invention, includes the nucleating agent in an amount appropriate to the polyester.

The lower limit for the intrinsic viscosity (IV) of the aliphatic-aromatic polyester according to the present invention is preferably 1.0 dL/g or more and is particularly preferably 1.2 dL/g or more. The upper limit for the intrinsic viscosity of the aliphatic-aromatic polyester according to the present invention is preferably 2.5 dL/g, is more preferably 2.2 dL/g, and is particularly preferably 2.0 dL/g. If the above intrinsic viscosity is less than the above lower limit, a molded article formed of the polyester is unlikely to have a sufficient mechanical strength. If the above intrinsic viscosity exceeds the above upper limit, it becomes difficult to perform molding because of high melt viscosity during molding. The intrinsic viscosity of the aliphatic-aromatic polyester according to the present invention is measured by the method described in Examples below.

The terminal acid value of the aliphatic-aromatic polyester according to the present invention is preferably 30 eq./ton or less, is more preferably 20 eq./ton or less, and is further preferably 15 eq./ton or less. If the terminal acid value of the aliphatic-aromatic polyester exceeds the above upper limit, viscosity becomes significantly reduced due to hydrolysis and, consequently, quality may become severely degraded. The terminal acid value of the aliphatic-aromatic

polyester according to the present invention is measured by the method described in Examples below.

The melting point ($Tm^2$) of the polyester according to the present invention is not limited. The melting point of an aliphatic-aromatic polyester that satisfies the above suitable intrinsic viscosity and terminal acid value is commonly about 100°C to about 150°C. Therefore, it is preferable that the nucleating agent used in the present invention have a melting point ($Tm^1$) of about 100°C to about 165°C. The melting point of the aliphatic-aromatic polyester according to the present invention is measured by the method described in Examples below.

The temperature-drop crystal peak time of the aliphatic-aromatic polyester according to the present invention which is measured by DSC is preferably 60 seconds or less and is more preferably 50 seconds or less. When the temperature-drop crystal peak time is equal to or less than the above upper limit, crystallization is facilitated to a sufficient degree, and the issues caused due to the insufficient crystallization can be suppressed. The lower limit for the temperature-drop crystal peak time is not limited and is commonly about 30 seconds. The temperature-drop crystal peak time of the aliphatic-aromatic polyester according to the present invention is measured by the method described in Examples below.

<Polyester Composition>

The aliphatic-aromatic polyester according to the present invention, which is produced by the present invention, may be mixed with an aliphatic polyester, an aliphatic oxycarboxylic acid-based polyester, and the like. Furthermore, a carbodiimide compound, a filler, a plasticizer, and the like may be used as needed. The aliphatic-aromatic polyester according to the present invention may be further mixed with other biodegradable resins (e.g., polycaprolactone, polyamide, polyvinyl alcohol, and cellulose ester), fine powders of animal/plant substances, such as starch, cellulose, paper, wood flour, chitin and chitosan, a coconut shell powder, and a walnut shell powder, and mixtures of the above materials, in amounts with which the advantageous effects of the present invention are not impaired. The aliphatic-aromatic polyester according to the present invention may be further mixed with additives, such as a heat stabilizer, a plasticizer, a lubricant, an antiblocking agent, a nucleating agent other than the nucleating agent that satisfies Formula (1) above, an inorganic filler, a colorant, a pigment, an ultraviolet absorber, and a light stabilizer, a modifying agent, a crosslinking agent, and the like in order to adjust the physical properties of the molded article and workability.

The method for producing a polyester composition from the aliphatic-aromatic polyester according to the present invention is not limited. Examples of the above method include a method in which blended polyester raw material chips are melt-mixed with one another in a single extruder; a method in which the raw material chips are melted in different extruders individually and subsequently mixed with one another; and a method in which the raw material chips are mixed by being kneaded with a common kneading machine, such as a single screw extruder, a twin screw extruder, a Banbury mixer, a roller mixer, a Brabender Plastograph, or a kneader blender. Alternatively, while the raw material chips are each directly fed to a molding machine to prepare the composition, the composition can be formed into a molded article.

Examples

The present invention is described in further details with reference to Examples below. Note that the present invention is not limited by Examples below without departing the summary of the present invention.

The methods for measuring physical properties and determining the evaluation items which were used in Examples below are as follows.

<Intrinsic Viscosity (IV)(dL/g)>

Intrinsic viscosity was measured with an Ubbelohde viscometer in the following manner.

A mixed solvent of phenol/tetrachloroethane (mass ratio: 1/1) was used. The number of seconds it took for a solution containing a polymer at a concentration of 0.5 g/dL to fall at 30°C and the number of seconds it took for only a solvent to fall at 30°C were measured. A calculation was performed using Formula (2) below.

$$IV = ((1 + 4K_H\eta_{SP})^{0.5} - 1)/(2K_HC) \quad ... \quad (2)$$

where $\eta_{SP} = \eta/\eta_0 - 1$, $\eta$ represents the number of seconds it took for the sample solution to fall, $\eta_0$ represents the number of seconds it took for the solvent to fall, C represents the concentration (g/dL) of the sample solution, and $K_H$ represents the Huggins constant. $K_H$ was set to 0.33.

<Terminal Acid Value (eq./ton) of Ester Oligomer>

Into a 100 mL beaker, 0.3 g of an ester oligomer in paste form was charged. To the beaker, 40 mL of benzyl

alcohol was added. Then, while a dry nitrogen gas was blown into the beaker, heating was performed on a hot plate having a temperature of 180°C. While dissolution was confirmed in the middle of heating, after the elapse of 20 minutes, the temperature was reduced to 60°C by water cooling. Oil droplets adhered on the wall of the beaker were washed away with 10 mL of benzyl alcohol. One or two droplets of a phenol red indicator were added to the resulting solution. While a dry nitrogen gas was blown into the beaker and stirring was performed, titration was performed with a 0.1 mol/L methanol solution of potassium hydroxide. The titration was finished when the color was changed from yellow to red. As a blank test, the same operation as described above was conducted using only benzyl alcohol. Terminal acid value (amount of terminal carboxyl groups) was calculated using Formula (3) below.

<Terminal Acid Value (eq./ton) of Polyester>

A pelletized polyester was dried with a vacuum dryer at 60°C for 8 hours minutes and then cooled to room temperature in a desiccator to prepare a sample. Subsequently, 0.5 g of the sample was precisely weighed and charged into a test tube. To the test tube, 25 mL of benzyl alcohol was added. Then, while a dry nitrogen gas was blown into the test tube, dissolution was performed at 195°C for 3 minutes. Subsequently, after cooling and stirring had been performed in an ice bath for 40 seconds, 2 mL of ethanol was gradually added to the test tube. One or two droplets of a phenol red indicator were added to the resulting solution. While a dry nitrogen gas was blown into the test tube and stirring was performed, titration was performed with a 0.1 mol/L benzyl alcohol solution of sodium hydroxide. The titration was finished when the color was changed from yellow to red. As a blank test, the same operation as described above was conducted without the addition of the polyester sample. Terminal acid value (amount of terminal carboxyl groups) was calculated using Formula (3) below.

<Calculation Formula for Terminal Acid Value>

$$\text{Terminal acid value (eq./ton)} = (a - b) \times 0.1 \times f/w \quad ... (3)$$

where a represents the amount (μL) of the 0.1 mol/L benzyl alcohol solution of sodium hydroxide which was required by the titration; b represents the amount (μL) of the 0.1 mol/L benzyl alcohol solution of sodium hydroxide which was required by the titration in the blank test; w represents the amount (g) of the ester oligomer sample or polyester sample; and f represents the titer of the 0.1 mol/L benzyl alcohol solution of sodium hydroxide.

The titer (f) of the 0.1 mol/L benzyl alcohol solution of sodium hydroxide was measured by the following method.

Into a test tube, 5 $cm^3$ of methanol was charged. One or two droplets of an ethanol solution of phenol red were added to the test tube as an indicator. Then, titration was performed using 0.4 $cm^3$ of a 0.1 mol/L benzyl alcohol solution of sodium hydroxide to the point of color change. Subsequently, 0.2 $cm^3$ of a 0.1 mol/L aqueous solution of hydrochloric acid having a known titer was added to a test tube as a reference solution, and titration was again performed using a 0.1 mol/L benzyl alcohol solution of sodium hydroxide to the point of color change (the above operation was conducted while a dry nitrogen gas was blown into the test tube). The titer (f) was calculated using Formula (4) below.

$$\text{Titer (f)} = \text{Titer of 0.1 mol/L aqueous solution of hydrochloric acid} \times \text{Amount (μL) of 0.1 N aqueous solution of hydrochloric acid charged/Amount (μL) of 0.1 mol/L benzyl alcohol solution of sodium hydroxide used in titration} \quad ... (4)$$

<Melting Point (°C) of Polyester>

In Examples 1 to 3 and Comparative Example 1 below, the endothermic peak temperature observed when the temperature was increased from room temperature to 250°C at a rate of 20 °C/min was measured with DSC6220 (produced by SII NanoTechnology Inc.). This endothermic peak temperature was considered as the melting point of the polyester.

In Examples 5 to 13 and Comparative Examples 2 to 5 below, the endothermic peak temperature observed when the temperature was increased from room temperature to 250°C at a rate of 20 °C/min was measured with DSC7020 (produced by Hitachi High-Tech Science Corporation). This endothermic peak temperature was considered as the melting point of the polyester.

<Fusion Enthalpy Ratio of Polyester>

The temperature was increased from room temperature to 200°C at a rate of 10 °C/min, subsequently reduced from 200°C to -50°C at a rate of 10 °C/min, and then increased from - 50°C to 200°C at a rate of 10 °C/min with DSC7020 (produced by Hitachi High-Tech Science Corporation). When a resin prepared by removing a nucleating agent from the aliphatic-aromatic polyester was subjected to DSC by the above-described method, the area of the endothermic peak that corresponded to the fusion of the sample resin in the second heating process was defined as fusion enthalpy (ΔHm and ΔHm0, respectively). The value (ΔHm/ΔHm0) obtained by dividing ΔHm by ΔHm0 was defined as fusion enthalpy ratio, which was used for evaluation, This (ΔHm/ΔHm0) value is an index of the degree of acceleration of crystallization; the larger the above value, the higher the degree of acceleration of crystallization.

<Temperature-Drop Crystallization Peak Time (sec) of Polyester>

Into an aluminum open pan for DSC measurement, 10 ± 1 mg of a polyester was charged. The polyester was heated and melted in a nitrogen atmosphere at 200°C for 10 minutes. While the polyester was in a molten state, the sample pan was set to DSC6220 (produced by SII NanoTechnology Inc.). Then, an isothermal measurement was conducted at 10°C. The time at which the amount of heat generated as a result of crystallization became maximal was recorded. The same measurement as described above was conducted at 20°C, 30°C, and 40°C. The shortest time it took until the maximal amount of heat was generated was considered as temperature-drop crystallization peak time. The smaller the above value, the higher the degree of acceleration of crystallization.

[Preparation of Catalyst for Polycondensation]

Into a reaction container equipped with a stirring device, 343.5 parts by weight of magnesium acetate tetrahydrate was charged. Furthermore, 1434 parts by weight of anhydrous ethanol (purity: 99% by weight or more) was added to the reaction container. Moreover, 218.3 parts by weight of ethyl acid phosphate (mixing weight ratio between monoester body and diester body: 45:55) was added to the reaction container. The resulting mixture was stirred at 23°C. After the complete dissolution of magnesium acetate had been confirmed, 410.0 parts by weight of tetra-n-butyl titanate was added to the reaction container. Stirring was continued for another 10 minutes to prepare a uniformly mixed solution. This mixed solution was concentrated under reduced pressure while the temperature was controlled to be 60°C or less. As a result, an amount of ethanol which was approximately half the amount of the ethanol added was discharged as a distillate, and a translucent viscous liquid remained. Then, 1108 parts by weight of 1,4-butanediol was added to the reaction container. Subsequently, further concentration was performed under reduced pressure while the temperature was controlled to be 80°C or less. Hereby, a catalyst solution having a titanium atom content of 3.5% by weight was prepared.

[Example 1]

Into a reaction container equipped with a stirring device, a nitrogen introduction port, a heating device, a thermometer, and a pressure reducing port, 33.6 parts by weight of succinic acid, 38.6 parts by weight of terephthalic acid, 69.7 parts by weight of 1,4-butanediol, 0.138 parts by weight of trimethylolpropane, 0.10 parts by weight of a polyethylene wax ("ACumist B6" produced by Honeywell, melting point: 124°C), and 0.0017 parts by weight of sodium hydroxide (NaOH) were charged as raw materials. Tetra-n-butyl titanate was further added to the reaction container such that the amount of tetra-n-butyl titanate in terms of titanium atoms was 30 ppm by weight of the amount of the polyester produced. While the contents of the container were stirred, a nitrogen gas was introduced to the container. The atmosphere inside the system was converted into a nitrogen atmosphere by reduced pressure replacement. Subsequently, while the inside of the system was stirred, the temperature was increased from 160°C to 230°C over 1 hour, and a reaction was conducted at 230°C for 3 hours. The terminal acid value of the resulting ester oligomer measured was 90 eq./ton.

The above catalyst solution was added to the ester oligomer such that the amount of the catalyst solution added was, in terms of titanium atoms, 70 ppm by weight of the amount of the polyester produced. While the temperature was increased to 250°C over 45 minutes, the pressure was reduced to $0.07 \times 10^3$ Pa or less over 1 hour 20 minutes. While the heating-depressurizing state was maintained, polycondensation was continued. The polymerization was finished

when the viscosity reached a predetermined value. Hereby, a polyester copolymer was prepared.

The liquid produced in the above esterification reaction and polycondensation reaction as a distillate was collected, and the tetrahydrofuran concentration was measured by a gas chromatography absolute calibration method. The amount of the tetrahydrofuran produced as a by-product (amount of by-product THF) calculated was 0.0047 parts by weight relative to 100 parts by weight of the polyester copolymer.

[Comparative Example 1]

A polyester copolymer was produced as in Example 1, except that the addition of the polyethylene wax and sodium hydroxide was omitted.

[Example 2]

A polyester copolymer was produced as in Example 1, except that the amount of the polyethylene wax added was changed to an amount that was ten times the amount of the polyethylene wax used in Example 1.

[Example 3]

A polyester copolymer was produced as in Example 1, except that a polypropylene wax ("PP7502" produced by Clariant Chemicals, melting point: 160°C) was used instead of the polyethylene wax.

[Example 4]

A polyester copolymer was produced as in Example 1, except that the amount of the sodium hydroxide added was changed to an amount that was ten times the amount of the sodium hydroxide used in Example 1.

The melting point ($Tm^2$) and temperature-drop crystallization peak time of each of the polyester copolymers produced in Examples 1 to 3 and Comparative Example 1 were measured. Table 1 lists the results and the production conditions.

The amounts of time during which polymerization was performed in Examples 1 and 4 and Comparative Example 1, the intrinsic viscosity (IV) of each of the polyester copolymers produced in Examples 1 and 4 and Comparative Example 1, the polymerization velocity calculated by dividing the intrinsic viscosity by the above polymerization time, the terminal acid value of each of the polyester polymers produced, and the amount of by-product THF produced in the production of each polyester copolymer were measured. Table 2 lists the results and the production conditions.

In Tables 1 and 2, polyethylene wax is referred to as "PE-Wax", and polypropylene wax is referred to as "PP-Wax". The difference ($Tm^1$ - $Tm^2$) between the melting point ($Tm^1$) of a nucleating agent and the melting point ($Tm^2$) of a polyester copolymer is referred to as "$\Delta$Tm".

In Tables 1 and 2, the amount of nucleating agent added is an amount relative to the amount of polyester copolymer, and the amount of basic inorganic compound added is an amount in terms of metal atoms relative to the amount of polyester copolymer.

[Table 1]

| | | | Example 1 | Example 2 | Example 3 | Comparative Example 1 |
|---|---|---|---|---|---|---|
| Production conditions | Succinic acid/ terephthalic acid | mol/mol | 55/45 | 55/45 | 55/45 | 55/45 |
| | Nucleating agent | Type | PE-Wax | PE-Wax | PP-Wax | - |
| | | Amount added (weight ppm) | 1000 | 10000 | 1000 | - |
| | Basic inorganic compound | Type | NaOH | NaOH | NaOH | - |
| | | Amount of Na added (weight ppm) | 10 | 10 | 10 | - |

(continued)

| | | | Example 1 | Example 2 | Example 3 | Comparative Example 1 |
|---|---|---|---|---|---|---|
| Measurement results | Melting point ($Tm^2$) | °C | 113 | 113 | 113 | 113 |
| | ΔTm | °C | 11 | 11 | 47 | - |
| | Temperature-drop crystallization peak time | sec | 45 | 31 | 67 | 108 |

[Table 2]

| | | | Example 1 | Example 4 | Comparative Example 1 |
|---|---|---|---|---|---|
| Production conditions | Succinic acid/ terephthalic acid | mol/mol | 55/45 | 55/45 | 55/45 |
| | Nucleating agent | Type | PE-Wax | PE-Wax | - |
| | | Amount added (weight ppm) | 1000 | 1000 | - |
| | Basic inorganic compound | Type | NaOH | NaOH | - |
| | | Amount of Na added (weight ppm) | 10 | 100 | - |
| Measurement results | Polymerization time | min | 151 | 168 | 140 |
| | Intrinsic viscosity (IV) | dL/g | 1.344 | 1.276 | 1.309 |
| | Polymerization velocity | dL/g/min | 0.0089 | 0.0076 | 0.0094 |
| | Terminal acid value | eq./ton | 14 | 8 | 25 |
| | Amount of by-product THF | mg/100g-polyester | 4.7 | 4.6 | 6.5 |

The results described in Table 1 show that the polyester copolymers prepared in Examples 1 to 3 according to the present invention, where a nucleating agent that satisfied Formula (1) was present in the reaction system, had a shorter temperature-drop crystallization peak time than the polyester copolymer prepared in Comparative Example 1, where such a nucleating agent was absent. That is, the degree of acceleration of crystallization was increased.

A comparison between the results of Examples 1 and 4 and the results of Comparative Example 1 described in Table 2 shows that, in Examples 1 and 4, the addition of NaOH limited (neutralized) the decomposition reaction caused by an acid and consequently reduced the amount of by-product THF and the terminal acid value.

[Example 5]

Into a reaction container equipped with a stirring device, a nitrogen introduction port, a heating device, a thermometer, and a pressure reducing port, 24.2 parts by weight of succinic acid, 48.0 parts by weight of 2,5-furandicarboxylic acid, 92.4 parts by weight of 1,4-butanediol, 0.138 parts by weight of trimethylolpropane, and 1.00 parts by weight of a polyethylene wax ("ACumist B6" produced by Honeywell, melting point: 124°C) were charged as raw materials. Tetra-n-butyl titanate was further added to the reaction container such that the amount of tetra-n-butyl titanate in terms of titanium atoms was 30 ppm by weight of the amount of the polyester produced. While the contents of the container were stirred, a nitrogen gas was introduced to the container. The atmosphere inside the system was converted into a nitrogen atmosphere by reduced pressure replacement. Subsequently, while the inside of the system was stirred, the temperature was increased from 170°C to 190°C over 1 hour, and a reaction was conducted at 190°C for 1 to 2 hours. Tetra-n-butyl titanate was further added to the container such that the amount of the tetra-n-butyl titanate added was, in terms of titanium atoms, 70 ppm by weight of the amount of the polyester produced. While the temperature was

increased to 240°C over 1.5 hours, the pressure was reduced to $0.07 \times 10^3$ Pa or less over 1.5 hours. While the heating depressurizing state was maintained, polycondensation was continued. The polymerization was finished when the viscosity reached a predetermined value. Hereby, a polyester copolymer was prepared.

[Comparative Example 2]

A polyester copolymer was produced as in Example 5, except that the addition of the polyethylene wax was omitted. The liquid produced in the above esterification reaction and polycondensation reaction as a distillate was collected, and the tetrahydrofuran concentration was measured by gas chromatography. The amount of the tetrahydrofuran produced as a by-product (amount of by-product THF) calculated was 19.2 parts by weight relative to 100 parts by weight of the polyester copolymer.

[Example 6]

Into a reaction container equipped with a stirring device, a nitrogen introduction port, a heating device, a thermometer, and a pressure reducing port, 24.2 parts by weight of succinic acid, 48.0 parts by weight of 2,5-furandicarboxylic acid, 92.4 parts by weight of 1,4-butanediol, and 0.138 parts by weight of trimethylolpropane were charged as raw materials. Tetra-n-butyl titanate was further added to the reaction container such that the amount of tetra-n-butyl titanate in terms of titanium atoms was 30 ppm by weight of the amount of the polyester produced. While the contents of the container were stirred, a nitrogen gas was introduced to the container. The atmosphere inside the system was converted into a nitrogen atmosphere by reduced pressure replacement. Subsequently, while the inside of the system was stirred, the temperature was increased from 170°C to 190°C over 1 hour, and a reaction was conducted at 190°C for 1 to 2 hours. Tetra-n-butyl titanate was further added to the container such that the amount of the tetra-n-butyl titanate added was, in terms of titanium atoms, 70 ppm by weight of the amount of the polyester produced. While the temperature was increased to 240°C over 1.5 hours, the pressure was reduced to $0.07 \times 10^3$ Pa or less over 1.5 hours. While the heating depressurizing state was maintained, the polycondensation reaction was conducted until the viscosity reached a predetermined value. Subsequently, 1.00 parts by weight of a polyethylene wax ("Luwax AH3" produced by BASF SE, melting point: 113°C) was added to 100 parts by mass of the resin that was in a molten state. After the resulting mixture had been kneaded, the polymerization was finished. Hereby, a polyester copolymer was prepared.

[Example 7]

A polyester copolymer was produced as in Example 6, except that the polyethylene wax ("Luwax AH3" produced by BASF SE) was changed to a polyethylene wax ("ACumist A6" produced by Honeywell, melting point: 132°C).

[Example 8]

A polyester copolymer was produced as in Example 6, except that the polyethylene wax ("Luwax AH3" produced by BASF SE) was changed to fatty acid amide ("SLIPAX H" produced by Mitsubishi Chemical Corporation, compound name: ethylenebis-12-hydroxystearamide, melting point: 145°C).

[Example 9]

A polyester copolymer was produced as in Example 6, except that the polyethylene wax ("Luwax AH3" produced by BASF SE) was changed to phosphoric acid ester metal salt ("Ecopromote" produced by Nissan Chemical Industries, Ltd., compound name: zinc phenylphosphonate, melting point: 164°C).

[Comparative Example 3]

A polyester copolymer was produced as in Example 6, except that the polyethylene wax ("Luwax AH3" produced by BASF SE) was changed to talc ("NANO ACE D-600" produced by Nippon Talc Co., Ltd., melting point: 900°C or more (decomposition)).

[Comparative Example 4]

A polyester copolymer was produced as in Example 6, except that the polyethylene wax ("Luwax AH3" produced by BASF SE) was changed to talc ("MS-KY" produced by Nippon Talc Co., Ltd., melting point: 900°C or more (decomposition)).

[Example 10]

The polyester copolymer produced in Example 5 was fed to a twin screw extruder (HK-25D(41D) produced by Parker Corporation, cylinder temperature: 220°C) equipped with an underwater cutter (EUP10 produced by ECON, cooling water temperature: 14°C to 28°C) and cut after being melt-kneaded. Hereby, spheroidal pellets of an aliphatic-aromatic polyester composition (major-axis length: about 5 mm, minor-axis length: about 3 mm) were prepared. Immediately after cutting, the pellets were cooled for about a few seconds with cooling water having a temperature of 15°C to 30°C, then subjected to centrifugal dehydration, and subsequently collected.

[Example 11]

A polyester copolymer was produced as in Example 5, except that the amount of the polyethylene wax added was changed to an amount (1000 ppm by weight) that was 0.1 times the amount of the polyethylene wax used in Example 5. The polyester copolymer was pelletized by the same method as in Example 10. Immediately after cutting, the pellets were cooled for about a few seconds with cooling water having a temperature of 15°C to 30°C, then subjected to centrifugal dehydration, and subsequently collected.
In any of Examples 10 and 11, significant fusion of the pellets was not observed after pelletization. In particular, in the case where the temperature of the cooling water was low, it was confirmed that the degree of fusion was reduced.

[Example 12]

A polyester copolymer was produced as in Example 5, except that tetraethylammonium hydroxide (produced by Tokyo Chemical Industry Co., Ltd., $Et_4NOH$) was added simultaneously when the raw materials were charged into the container, such that the amount of the tetraethylammonium hydroxide added was 300 ppm by weight of the amount of the polyester produced.
The liquid produced in the above esterification reaction and polycondensation reaction as a distillate was collected, and the tetrahydrofuran concentration was measured by gas chromatography. The amount of the tetrahydrofuran produced as a by-product (amount of by-product THF) calculated was 16.3 parts by weight relative to 100 parts by weight of the polyester copolymer.

[Example 13]

A polyester copolymer was produced as in Example 5, except that sodium hydroxide (produced by Tokyo Chemical Industry Co., Ltd., NaOH) was added simultaneously when the raw materials were charged into the container, such that the amount of the sodium hydroxide added was, in terms of sodium atoms, 30 ppm by weight of the amount of the polyester produced.
The liquid produced in the above esterification reaction and polycondensation reaction as a distillate was collected, and the tetrahydrofuran concentration was measured by gas chromatography. The amount of the tetrahydrofuran produced as a by-product (amount of by-product THF) calculated was 17.0 parts by weight relative to 100 parts by weight of the polyester copolymer.

[Comparative Example 5]

A polyester copolymer that did not include a nucleating agent was produced as in Comparative Example 2, except that 22.3 parts by weight of succinic acid, 52.2 parts by weight of dimethyl 2,5-furandicarboxylate, 68.1 parts by weight of 1,4-butanediol, and 0.138 parts by weight of trimethylolpropane were used as raw materials.
The liquid produced in the above esterification reaction and polycondensation reaction as a distillate was collected, and the tetrahydrofuran concentration was measured by gas chromatography. The amount of the tetrahydrofuran produced as a by-product (amount of by-product THF) calculated was 7.4 parts by weight relative to 100 parts by weight of the polyester copolymer.
The melting point ($Tm^2$) and fusion enthalpy ratio ($\Delta Hm/\Delta Hm0$) of each of the polyester copolymers produced in Examples 5 to 11 and Comparative Examples 2 to 4 were measured. Tables 3A, 3B, and 4 list the results and the production conditions.
In Examples 10 and 11, the shape of pellets and ease of pelletization were evaluated. Table 4 also lists the results.
The amounts of time during which polymerization was performed in Examples 12 and 13 and Comparative Examples 2 and 5, the intrinsic viscosity (IV) of each of the polyester copolymers produced in Examples 12 and 13 and Comparative Examples 2 and 5, the polymerization velocity calculated by dividing the intrinsic viscosity by the above polymerization time, the terminal acid value of each of the polyester copolymers produced, the amount of by-product

THF produced in the production of each polyester copolymer, and the melting point ($Tm^2$) and fusion enthalpy ratio ($\Delta Hm/\Delta Hm0$) of each polyester copolymer were measured. Table 5 lists the results and the production conditions.

In Tables 3A, 3B, 4, and 5, polyethylene wax is referred to as "PE-Wax", and the difference ($Tm^1$ - $Tm^2$) between the melting point ($Tm^1$) of a nucleating agent and the melting point ($Tm^2$) of a polyester copolymer is referred to as "$\Delta Tm$".

In Tables 3A, 3B, 4, and 5, the amounts of nucleating agent and basic organic compound added are amounts relative to the amount of polyester copolymer, and the amount of basic inorganic compound added is an amount in terms of metal atoms relative to the amount of polyester copolymer.

[Table 3]

<Table 3A>

| | | | Example 5 | Example 6 | Example 7 | Example 8 | Example 9 |
|---|---|---|---|---|---|---|---|
| Production conditions | Succinic acid/ furandicarboxylic acid | mol/mol | 40/60 | 40/60 | 40/60 | 40/60 | 40/60 |
| | Nucleating agent | Type | PE-Wax (Acumist B6) | PE-Wax (Luwax AH3) | PE-Wax (Acumist A6) | Fatty acid amide (SLIPAX H) | Phosphoric acid ester metal salt (Ecopromote) |
| | | Melting point ($Tm^1$)(°C) | 124 | 113 | 132 | 145 | 164 |
| | | Amount added (weight ppm) | 10000 | 10000 | 10000 | 10000 | 10000 |
| | Basic inorganic compound | Type | - | - | - | - | - |
| | | Amount of Na added (weight ppm) | - | - | - | - | - |
| Measurement results | Melting point ($Tm^2$) | °C | 109 | 109 | 109 | 109 | 109 |
| | $\Delta Tm$ | °C | 15 | 4 | 23 | 36 | 55 |
| | $\Delta Hm/\Delta Hm0$ | - | 9.61 | 14.4 | 12.4 | 9.99 | 3.43 |

<Table 3B>

| | | | Comparative Example 2 | Comparative Example 3 | Comparative Example 4 |
|---|---|---|---|---|---|
| Production conditions | Succinic acid/ furandicarboxylic acid | mol/mol | 40/60 | 40/60 | 40/60 |
| | Nucleating agent | Type | - | Talc (Nano Ace D-600) | Talc (MS-KY) |
| | | Melting point ($Tm^1$) (°C) | - | >900 (Decomposition) | >900 (Decomposition) |
| | | Amount added (weight ppm) | - | 10000 | 10000 |
| | Basic inorganic compound | Type | - | - | - |
| | | Amount of Na added (weight ppm) | - | - | - |
| Measurement results | Melting point ($Tm^2$) | °C | 109 | 109 | 109 |
| | ΔTm | °C | - | >791 | >791 |
| | ΔHm/ΔHm0 | - | - | 0.84 | 0.93 |

[Table 4]

| | | | Example 10 | Example 11 |
|---|---|---|---|---|
| Production conditions | Succinic acid/furandicarboxylic acid | mol/mol | 40/60 | 40/60 |
| | Nucleating agent | Type | PE-Wax | PE-Wax |
| | | Amount added (weight ppm) | 10000 | 1000 |
| | Pellet | Shape | Spheroidal | Spheroidal |
| | | Ease of pelletization | ○ | ○ |
| Measurement results | Melting point ($Tm^2$) | °C | 109 | 109 |
| | ΔTm | °C | 15 | 15 |
| | ΔHm/ΔHm0 | - | 12.9 | 2.76 |

[Table 5]

| | | | Example 12 | Example 13 | Comparative Example 2 | Comparative Example 5 |
|---|---|---|---|---|---|---|
| Production conditions | Succinic acid/ furandicarboxylic acid component | mol/mol | 40/60 | 40/60 | 40/60 | 40/60 |
| | Furandicarboxylic acid component | | Furandicarboxylic acid | Furandicarboxylic acid | Furandicarboxylic acid | Dimethyl furandicarboxylate |
| | Nucleating agent | Type | PE-Wax (Acumist B6) | PE-Wax (Acumist B6) | - | - |
| | | Melting point ($Tm^1$/°C) | 124 | 124 | - | - |
| | | Amount added (weight ppm) | 10000 | 10000 | - | - |
| | Basic compound | Type | Et4NOH | NaOH | - | - |
| | | Amount added (weight ppm) | 300 | 30 as Na | - | - |
| Measurement results | Polymerization time | min | 142 | 160 | 138 | 126 |
| | Intrinsic viscosity(IV) | dL/g | 1.378 | 1.263 | 1.338 | 1.299 |
| | Polymerization velocity | dL/g/min | 0.0096 | 0.0079 | 0.0097 | 0.0103 |
| | Terminal acid value | eq/ton | 42 | 41 | 78 | 73 |
| | Amount of by-product THF | g/100g-polyester | 16.3 | 17 | 19.2 | 7.4 |
| | Melting point ($Tm^2$) | °C | 109 | 109 | 109 | 109 |
| | $\Delta Tm$ | °C | 15 | 15 | - | - |
| | $\Delta Hm/\Delta Hm0$ | - | 2.08 | 2.46 | - | - |

The results described in Tables 3A and 3B show that the polyester copolymers prepared in Examples 5 to 9 according to the present invention, which included a nucleating agent that satisfied Formula (1), had a larger $\Delta Hm/\Delta Hm0$ value than the polyester copolymer prepared in Comparative Example 2, which did not include a nucleating agent. That is, the degree of acceleration of crystallization was increased.

In Comparative Examples 3 and 4, where a nucleating agent that did not satisfy Formula (1) was used, the $\Delta Hm/\Delta Hm0$ value was not increased to a sufficient degree and, consequently, the effect of accelerating crystallization was low.

In Examples 10 and 11 described in Table 4, although the $\Delta Hm/\Delta Hm0$ value varied in some degree by the amount of the nucleating agent that satisfied Formula (1) added, in either case, it was possible to form spheroidal pellets, which are more resistant to fusion, by pelletizing the aliphatic-aromatic polyester according to the present invention with an underwater cutter. Furthermore, the occurrence of blocking was substantially not confirmed.

A comparison between the results of Examples 12 and 13 and the results of Comparative Examples 2 and 5 described in Table 5 shows that, in the case where the basic compound is used (Examples 12 and 13), the decomposition reaction caused by an acid can be limited (neutralized) and, consequently, the amount of by-product THF can be reduced even when a furandicarboxylic acid component is used as a raw material.

Although the present invention has been described in detail with reference to specific aspects, it is apparent to a person skilled in the art that various alterations and modifications can be made therein without departing from the spirit and scope of the present invention.

The present application is based on Japanese Patent Application No. 2020-021757 filed on February 12, 2020, which is incorporated herein by reference in its entirety.

## Claims

1. A method for producing an aliphatic-aromatic polyester, the method comprising subjecting an aliphatic diol component, an aliphatic dicarboxylic acid component, and an aromatic dicarboxylic acid component that serve as raw materials to an esterification and/or transesterification reaction and a polycondensation reaction subsequent to the esterification and/or transesterification reaction in a presence of a catalyst, wherein, while the aliphatic-aromatic polyester is produced, a nucleating agent that satisfies a condition represented by Formula (1) below is present in a reaction system.

$$0^\circ C < Tm^1 - Tm^2 \leq 100^\circ C \quad \ldots \quad (1)$$

(in Formula (1) above, $Tm^1$: a melting point (°C) of the nucleating agent, and $Tm^2$: a melting point (°C) of the aliphatic-aromatic polyester)

2. The method for producing an aliphatic-aromatic polyester according to Claim 1, wherein an amount of the nucleating agent present is 100 to 10000 ppm by weight of an amount of the aliphatic-aromatic polyester produced.

3. The method for producing an aliphatic-aromatic polyester according to Claim 1 or 2, wherein a molar ratio between the aliphatic dicarboxylic acid component and the aromatic dicarboxylic acid component is 40:60 to 60:40.

4. The method for producing an aliphatic-aromatic polyester according to any one of Claims 1 to 3, wherein the esterification and/or transesterification reaction is conducted in a presence of a basic inorganic compound.

5. The method for producing an aliphatic-aromatic polyester according to Claim 4, wherein an amount of the basic inorganic compound present is, in terms of metal atoms, 1 to 100 ppm by weight of the amount of the aliphatic-aromatic polyester produced.

6. The method for producing an aliphatic-aromatic polyester according to any one of Claims 1 to 5, wherein the aliphatic dicarboxylic acid component is a succinic acid component.

7. The method for producing an aliphatic-aromatic polyester according to any one of Claims 1 to 6, wherein the aromatic dicarboxylic acid component is a terephthalic acid component and/or a furandicarboxylic acid component.

8. The method for producing an aliphatic-aromatic polyester according to any one of Claims 1 to 7, wherein the aliphatic dicarboxylic acid component is derived from biomass.

9. The method for producing an aliphatic-aromatic polyester according to any one of Claims 1 to 8, wherein the aliphatic diol component is derived from biomass.

## INTERNATIONAL SEARCH REPORT

International application No. PCT/JP2021/003687

A. CLASSIFICATION OF SUBJECT MATTER
Int.Cl. C08G63/181(2006.01)i, C08G63/78(2006.01)i
FI: C08G63/78ZBP, C08G63/181

According to International Patent Classification (IPC) or to both national classification and IPC

B. FIELDS SEARCHED

Minimum documentation searched (classification system followed by classification symbols)
Int.Cl. C08G63/181, C08G63/78

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-266809 A (NIPPON ESTER CO., LTD.) 06 November 2008 (2008-11-06), claims, paragraph [0020], example 7 | 1-3, 6-9<br>4-5 |
| X<br>Y | JP 2008-222737 A (NIPPON ESTER CO., LTD.) 25 September 2008 (2008-09-25), claims, paragraph [0013], examples | 1-3, 6-9<br>4-5 |
| X<br>Y | JP 2011-231178 A (NIPPON ESTER CO., LTD.) 17 November 2011 (2011-11-17), claims, paragraph [0015], examples | 1-3, 6-9<br>4-5 |
| Y<br>A | JP 2009-001669 A (TORAY INDUSTRIES, INC.) 08 January 2009 (2009-01-08), examples | 4-5<br>1-3, 6-9 |
| Y<br>A | JP 2017-075271 A (TORAY INDUSTRIES, INC.) 20 April 2017 (2017-04-20), examples | 4-5<br>1-3, 6-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 March 2021 | 30 March 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/003687

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-235150 A (TORAY INDUSTRIES, INC.) 15 October 2009 (2009-10-15), entire text | 1-9 |
| A | JP 2008-031457 A (MITSUBISHI CHEMICAL CORPORATION, INTERNAT CENTER FOR ENVIRONMENTAL TECHNOL TRANSAFER) 14 February 2008 (2008-02-14), entire text | 1-9 |

Form PCT/ISA/210 (second sheet) (January 2015)

**INTERNATIONAL SEARCH REPORT**
Information on patent family members

International application No.
PCT/JP2021/003687

| | | |
|---|---|---|
| JP 2008-266809 A | 06 November 2008 | (Family: none) |
| JP 2008-222737 A | 25 September 2008 | (Family: none) |
| JP 2011-231178 A | 17 November 2011 | (Family: none) |
| JP 2009-001669 A | 08 January 2009 | (Family: none) |
| JP 2017-075271 A | 20 April 2017 | (Family: none) |
| JP 2009-235150 A | 15 October 2009 | (Family: none) |
| JP 2008-031457 A | 14 February 2008 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008031457 A
- JP 2020021757 A